(19) Europäisches Patentamt
European Patent Office
Office européen des brevets

(11) **EP 1 953 855 A2**

(12) **EUROPEAN PATENT APPLICATION**

(43) Date of publication:
**06.08.2008 Bulletin 2008/32**

(51) Int Cl.:
*H01M 6/16* (2006.01)     *H01M 4/06* (2006.01)
*H01M 4/58* (2006.01)

(21) Application number: **08009202.6**

(22) Date of filing: **05.06.2003**

(84) Designated Contracting States:
**AT BE BG CH CY CZ DE DK EE ES FI FR GB GR HU IE IT LI LU MC NL PT RO SE SI SK TR**

(30) Priority: **05.06.2002 US 164239**

(62) Document number(s) of the earlier application(s) in accordance with Art. 76 EPC:
**03757346.6 / 1 518 287**

(71) Applicant: **EVEREADY BATTERY COMPANY, INC.
Westlake,
Ohio 44145 (US)**

(72) Inventor: **Marple, Jack W.
Avon,
OH 44011 (US)**

(74) Representative: **Weber, Thomas
Patentanwälte von Kreisler-Selting-Werner
Deichmannhaus am Dom
Bahnhofsvorplatz 1
50667 Köln (DE)**

Remarks:
This application was filed on 20-05-2008 as a divisional application to the application mentioned under INID code 62.

(54) **Nonaqueous electrochemical cell with improved energy density**

(57)     An electrochemical cell comprising:

a non-aqueous electrolyte comprising an organic solvent,

electrodes being wound together into a jellyroll electrode assembly, wherein the cathode assembly comprises a metallic cathode current collector having two major surfaces and a cathode coating comprising iron disulfide disposed on at least one of the two major surfaces and the anode comprising metallic lithium alloyed with less than 1.0 percent by weight of aluminum and electrical contact between the electrodes and other cell components is made by means of pressure or fastening,

wherein the anode to cathode input ratio is less than or equal to 1.0, wherein the anode to cathode ratio is determined as follows:
- anode to cathode input ratio = anode capacity per 2.54 cm [linear inch]/cathode capacity per 2.54 cm [linear inch]

wherein
- the anode capacity per 2.54 cm [linear inch] = (foil thickness) x (interfacial electrode width) x 2.54 cm [1 linear inch] x (density of lithium foil at 20 °C x (lithium energy density, 2861.7 mAh/g), and
- the cathode capacity per 2.54 cm [linear inch] = (final cathode coating thickness) x (interfacial electrode width) x 2.54 cm [1inch] x (cathode dry mix density) x (final cathode packing percentage) x (dry weight percent $FeS_2$) x (percent purity $FeS_2$) x ($FeS_2$ energy density, 893.58 mAh/g).

FIG. 1

**Description**

This invention relates to a nonaqueous cell, such as a cell wherein lithium is the active anode material and iron disulfide or pyrite is the active cathode material.

The electrochemical couple of a lithium metal negative electrode (anode) with a pyrite or iron disulfide positive electrode (cathode) has long been recognized as a theoretically high-energy couple. Hereinafter, "pyrite" and "iron disulfide" will be used interchangeably. Lithium metal possesses the lowest density of any metal and provides a volumetric energy density of 2062 milliamp-hours/cubic centimeter (mAh/cm$^3$) and a gravimetric energy density of 3861.7 milliamp-hours/gram (mAh/g). Pyrite offers advantageous energy opportunities as a result of its ability to undergo a four electron reduction and has a volumetric energy density of 4307 mAh/cm$^3$ and a gravimetric energy density of 893.58 mAh/g.

There are, however, many challenges in achieving a commercially viable cell with this particular electrochemical couple. One key challenge is how to use internal cell volume efficiently. It is known that this electrochemical system results in a volume increase upon discharge and the accompanying formation of reaction products. It is therefore necessary that the cell design incorporate sufficient void volume to accommodate this volume increase. It will be appreciated then, that as the discharge efficiency of the cell increases, additional reaction products will be generated causing incremental volume increases that must be accommodated by the incorporation of sufficient void volume within the cell.

Attempts to improve the energy density of the cell by increasing the density of the cathode present additional challenges. First, it will be appreciated that an increase in the density of the cathode will result in less void volume within this electrode to accommodate the reaction products, in turn requiring that alternative void sites within the cell be provided. Further, the densification of the cathode through an increase in the calendering force applied to the coated electrode stock can result in a stretching of the metallic foil substrate that functions as the cathode current collector. Such stretching can compromise the uniformity of the coating layer and can lead to wrinkling, cracking and ultimately the separation of all or portions of the coating layer from the substrate.

In the interest of accommodating the increase in volume relating to the reaction products for the lithium/iron disulfide electrochemical couple, while also improving the cell discharge efficiency and cell capacity, it will be appreciated that the volume occupied by non-reactive internal cell components should be minimized to the extent possible. In this regard, use of lithium metal foil as the anode obviates the need for a discrete anode current collector, since the lithium foil is sufficiently conductive. However, lithium foil has a relatively low tensile strength and as a result can undergo stretching and thinning causing localized regions of reduced anode capacity. In a pronounced case, the thinning can be aggravated to the point of disconnects within the lithium anode. Various solutions to the problem of lithium foil weakness have been proposed, including the design of cells with thicker lithium foils, separate anode current collectors, and lithium anodes with regions of reduced or non-ionic transport. These solutions typically result in an anode overbalance in the cell and are not efficient or volumetrically satisfactory. The use of excess lithium in the cell is also costly since metallic lithium foil is a relatively costly material.

There is therefore a need for a nonaqueous lithium/iron disulfide cell with an increased energy density and discharge efficiency that accommodates the volume increase of the reaction products generated during discharge. There is further a need for such a nonaqueous cell having a dense cathode with good adhesion to the current collector substrate without sacrificing the uniformity of the cathode coating layer. There is further a need for such a nonaqueous cell that reduces the anode to cathode cell balance without sacrificing the integrity of the anode.

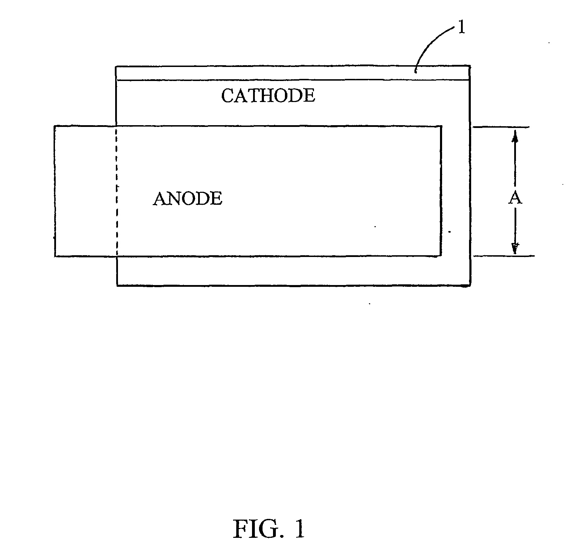

The present invention will be further illustrated by reference to the accompanying drawing, in which FIGURE 1 is an illustration of an anode and a cathode and the interfacial electrode width.

This invention relates to a nonaqueous cell comprising a lithium metallic foil anode and a cathode coating comprising iron disulfide as the active material wherein the coating is applied to at least one surface of a metallic substrate that functions as the cathode current collector. In particular, the cell of the invention has improved performance on high rate discharge and is achieved, surprisingly, with an anode underbalance. Said another way, the cell of the invention has an anode to cathode input ratio, as defined herein, that is less than or equal to 1.0. We have discovered, unexpectedly, that the energy density for the cell both volumetrically and gravimetrically can be improved by approximately 20 to 25% while only increasing the volume of the cathode coating solids by approximately 10% through a unique and novel cathode coating formulation.

The cathode coating formulation of the cell of the invention may be used in conjunction with a lithium metallic foil anode. The lithium metal may be a lithium-aluminum alloy. The aluminum content of the lithium-aluminum alloy may be between 0.1 and 2.0 percent by weight. In some embodiments the aluminum content is between 0.1 and 0.9 percent. In another embodiment the aluminum content of the lithium foil anode material is 0.5 percent. Such an alloy is available commercially from, by way of example, Chemetall Foote Corporation, Kings Mountain, NC, USA. We have found that the use of aluminum-alloyed lithium, in conjunction with the cathode slurry formulation described below, enables the amount of lithium in the cell to be minimized. The alloyed lithium results in an increase in strength. For example, in a cell of the invention where the electrodes are wound together into a jellyroll electrode assembly, using a lithium-aluminum alloy containing about 0.5 weight percent aluminum increases the strength such that the material stretches less than 0.5 percent over a 30.5 cm (12.0 inch) initial anode length. This means that, when the cell is discharged, anode discontinuities along the length of the wound electrode strip are minimized, contributing to an improvement in overall cell performance. We have also observed that the solid electrolyte interface film (or SEI) that forms during the initial reaction of the alloyed lithium anode with organic solvents in the electrolyte exhibits less ionic transfer resistance than the SEI film that forms with an unalloyed lithium anode.

The cathode coating of the cell of the invention can be formed by applying a slurry containing the coating ingredients in a solvent to the current collector. The slurry includes iron disulfide, electrically conductive material, such as a carbon material, and optionally other additives. A novel slurry formulation enables a denser cathode, an anode to cathode input ratio of 1.0 or less and an increase in the cell energy density. These things are accomplished without sacrificing the discharge efficiency of the cell, the cathode integrity or the adhesion of the dried cathode slurry to the metallic foil substrate. We have discovered that proper selection of the conductive additives in the cathode coating allows for a reduction in the amount of solvent utilized, resulting in a reduction of void volume in the final electrode coating and a denser cathode. We have also discovered that by incorporating certain slip agents and rheological modifiers, the calendering force required to achieve the desired cathode porosity and coating thickness can be minimized, further enabling the anode to cathode input ratio of the cell of the invention.

The conductive carbon additive can comprise a mixture of synthetic graphite and acetylene black. We have discovered that certain beneficial effects can be achieved by incorporating a synthetic graphite that is highly crystalline and possesses an extreme anisotropic character. This graphite (hereinafter referred to as "highly crystalline synthetic graphite") provides a powder with a moderate to low surface area and structure and also has a high purity level. Suitable highly crystalline synthetic graphite can be in the form of thin platelets. The platelets can be nearly flat or they can be curved, such as in an arced or cup-like shape. Curved platelets tend to add strength to the cathode coating and improve the electrical conductivity of the cathode. The moderate to low surface area and structure are related to BET and DBP values as defined below. Carbons with higher surface areas and structures tend to retain solvent, ultimately contributing to coating defects. A suitable highly crystalline synthetic graphite has a maximum impurity or ash level of 0.1 percent, a mean particle size of 9 micrometers ($\mu$m), a BET surface area of approximately 10 $m^2$/g and a n-dibutyl phthalate (DBP) oil absorption ratio of 190 percent. BET specific surface area is the specific surface area, determined by the Brunauer-Emmet-Taylor method, according to ASTM D6556, which correlates surface area with multipoint nitrogen gas adsorption. The DBP value is determined according to ASTM D2414. Such a highly crystalline synthetic graphite is available commercially from Timcal Graphite (Westlake, OH, USA) as TIMREX® MX-15. TIMREX® MX-15 has an impurity level of 0.01 to 0.2 percent, a mean particle size of 3.0 to 11.0 $\mu$m, a BET surface area of 3.0 to 11.0 $m^2$/g and a DBP ratio of 160 to 200 percent. Other highly crystalline synthetic graphites, such as expanded synthetic graphite, can be used.

An example of a suitable acetylene black is SHAWTNIGAN BLACK® ABC55, a 55% compressed acetylene black available commercially from Chevron Phillips Chemical Company LP, The Woodlands, TX, USA.

In one embodiment the amount of conductive carbon additives in the slurry formulation is from 7.0 to 11.0 volume percent of the total solids content, and in another embodiment the amount of conductive carbon is from 10.0 to 10.5 volume percent of the total solids content. "Solids content" and "solids percent" as used herein refer to the dry cathode coating formulation without consideration of the solvent, while "wet content" and "wet percent" refer to the cathode coating formulation taking into consideration the solvent used. We have further discovered that by using a high level of highly crystalline synthetic graphite and a low the level of acetylene black, undesired coating solvent retention that results in an increased difficulty in processing the electrode can generally be reduced.

This can also reduce electrolyte solvent retention and improve high rate discharge performance. For example, the volume of highly crystalline synthetic graphite can exceed the volume of acetylene black, on both a wet and a dry or solids basis. Processing can be further improved when the volume of highly crystalline synthetic graphite is at least twice the volume of acetylene black, again on a wet and solids basis. In a cathode manufacturing process such as that disclosed in Example 1 below, the solids volume percent of highly crystalline synthetic graphite is advantageously between 7.0 and 7.5, while the solids volume percent of acetylene black is between 3.0 and 3.5, such as when the solids volume percent of highly crystalline synthetic graphite is about 7.39 and the solids volume percent of acetylene black is about 3.05. On a solids weight percent basis, acetylene black is advantageously from 1.0 to 3.0 percent, and highly crystalline synthetic graphite is advantageously from 3.0 to 6.0 weight percent for such a process.

The cathode, slurry formulation can further comprise at least one rheological modifier to aid in electrode processing. We have discovered that a cathode slurry comprising such a modifier with a high sensitivity to shear stress further enables a dense cathode and a low anode to cathode input ratio. An example of such a modifier is one that will aid the slurry in retaining its viscosity while in an undisturbed state but will cause a drop in the slurry viscosity when the slurry is subjected to a relatively high shear. High shear can be encountered during the process of transferring the slurry from a holding tank to the electrode substrate. Application of the slurry onto the current collector can be further enhanced when the modifier further aids the slurry in returning to the relatively higher viscosity once the shear stress is removed. We have discovered that the incorporation of fumed silica into the cathode slurry of the cell of the invention provides the above described shear sensitivity. The silica can have a silanol group surface concentration of between 0.5 and 1.0 mmol/g, such as between 0.70 and 0.80 mmol/g.

The fumed silica can be added in an amount of from 0.2 to 0.6 weight percent of the solids incorporated into the slurry formulation. The bulk density of the silica can be from 35.0 to 50.0 g/liter. An example of a suitable fumed silica additive is AEROSIL® 200, available commercially from, Degussa AG, Düsseldorf, Germany. It has a bulk density of 45.0 to 50.0 g/liter and has been used in a slurry formulation in which the fumed silica comprises 0.3 weight percent of the solids. Other rheological modifiers include polyethylene oxides (e.g., POLYOX™ WSR-205 from Dow Chemical Company, Midland, MI, USA) and overbased calcium sulfonates (e.g., K-STAY® 501, King Industries, Norwalk, CT, USA).

A slip agent can also be used as an additive in the cathode slurry formulation. Micronized TEFLON®, or micronized polytetrafluoroethylene (PTFE), is an example of a slip agent. A micronized PTFE with a mean particle size of 2.0 to 4.0 $\mu$m and a maximum particle size of 12.0 $\mu$m is easily dispersed in coating formulations and has been processed to a 1.0 to 1.5 NPIRI grind, where NPIRI stands for National Printing Ink Research Institute. In a cathode manufacturing process such as that disclosed in the Example below, micronized PTFE can comprise from 0.2 to 0.6 weight percent of the total weight of the solids in the slurry. Suitable micronized PTFEs are FLUO HT, manufactured by Micro Powders Inc. and distributed by Dar-Tech Inc., Cleveland, OH, USA, and POLYMIST TEFLON® powder, from E. 1. du Pont de Nemours and Company, Wilmington, DE, USA. Other slip agents include microwax powders such as SUPERSLIP 6520, manufactured by Micro Powders, Inc., and distributed by Dar-Tech Inc., Cleveland, OH, USA.

The anode to cathode input ratio as used herein can be calculated as follows:

Anode capacity per linear inch:

$$\text{(foil thickness) x (interfacial electrode width) x (1 linear inch) x (density of lithium foil at } 20°C) \text{ x (lithium energy density, 3861.7 mAh/g).}$$

Cathode capacity per linear inch:

$$\text{(final cathode coating thickness) x (interfacial electrode width) x 1 inch x (cathode dry mix density) x (final cathode packing percentage) x (dry weight percent FeS}_2) \text{ x (percent purity FeS}_2) \text{ x (FeS}_2 \text{ energy density, 893.58 mAh/g).}$$

$$\text{Anode/cathode input ratio = anode capacity per linear inch/cathode capacity per linear inch.}$$

"Interfacial electrode width" as used herein is the linear dimension that shares an interfacial area between the cathode and the anode. An example is illustrated in Figure 1, where the dimension labeled "A" is the interfacial electrode width. "Final cathode coating thickness" refers to the coating thickness after any calendering operation or other densification processing of the cathode. "Final cathode packing percentage" refers to the solid volume percentage after any calendering operation or other densification processing and is equivalent to 100 percent less the void volume percentage after any calendering operation or other densification processing of the cathode. The "cathode dry mix density" refers to the additive density of the solid components of the cathode coating.

A binder may be included in the cathode coating of the cell of the invention. An example of a suitable binder is a styrene-ethylene/butylene-styrene (SEBS) block copolymer. One such suitable block copolymer is available commercially from Kraton Polymers of Houston, TX, USA as KRATON® G1651. Other binders and combinations of binders can be used.

A solvent is included in the cathode formulation to form a slurry. An organic solvent, such as stabilized 1,1,2-trichloroethylene is suitable for use as a solvent when SEBS is used as a binder. Other solvents, including aqueous solvents, can be used. The selection of a solvent will depend in part on the binder that is used. For example, a latex binder including polyacrylamide and at least one copolymer of carboxylated styrenebutadiene and styrene-acrylate can be used with water as a solvent.

EXAMPLE 1

R6 (AA) size electrochemical cells comprising lithium as the active anode material and pyrite as the active cathode material were constructed according to the invention as follows.

A continuous strip of aluminum foil 0.254 mm (0.001 inch) thick by 43.7 mm (1.72 inches) wide was provided as the cathode current collector and substrate for the cathode coating. The aluminum foil was full hard standard alloy 1145-H19 aluminum with both surfaces flame cleansed to remove oils and improve adhesion of the coating to the substrate surface.

A cathode coating slurry was prepared using the dry ingredients listed in Table 1.

Table 1

| Material | Amount (weight percent) | $cm^3/100g$ |
|---|---|---|
| $FeS_2$ | 92.0 | 19.087 |
| Acetylene Black | 1.4 | 0.733 |
| Graphite | 4.0 | 1.777 |
| Fumed Silica | 0.3 | 0.136 |
| Micronized PTFE | 0.3 | 0.136 |
| Binder | 2.0 | 2.198 |
| Total | 100.0 | 24.067 |
| | | $(4.155 \ g/cm^3)$ |

The $FeS_2$, a battery grade iron pyrite with a purity level of 95 percent by weight available from Chemetall, was sieved through a 230 mesh screen to remove particles with a dimension greater than 62 $\mu$m. The acetylene black was ABC55 SHAWINIGAN BLACK®. The graphite was TIMREX® MX-15. The fumed silica was AEROSIL® 200. The PTFE was FLUO HT. The binder was KRATON® G1651. The sieved pyrite, acetylene black, graphite and fumed silica were weighed and mixed with 1,1,2-trichloroethylene solvent using a high speed disc mixer. After these ingredients were thoroughly wetted and blended, the polymer binder was added to the mixer and blended until it dissolved uniformly. The micronized PTFE was then blended into the mixture and additional solvent incorporated to achieve a desired viscosity in the range of 2900 to 4100 centipoise, as measured using a Brookfield Viscometer.

Slurry was applied to both sides of the aluminum strip substrate in a roll coating operation, leaving an uncoated band along one edge of both sides of the substrate in the web (machine) direction (the mass free zone 1 shown in Fig. 1). The wet coating was applied to a thickness of 0.1435 mm (0.00565 inch) by 40.8 mm (1.605 inches) wide on each side of the cathode collector strip. After drying, the cathode coating was densified by calendering, reducing the coating to approximately 0.0800 mm (0.00315 inch) on each side of the 0.0254 mm (0.001 inch) thick substrate. The resulting cathode coating had a solids packing factor of approximately 64 percent.

A strip of lithium metal foil 0.152 mm (0.006 inch) thick by 39.0 mm (1.535 inches) wide and alloyed at 0.5 weight percent with aluminum was provided for the anode. Anode tabs, made from 0.051 mm (0.002 inch) thick nickel plated steel foil were cut and pressure bonded to the lithium foil web at predetermined intervals corresponding to an anode length of 30.5 cm (12.00 inches) before winding.

Two rolls of 25 $\mu$m thick microporous polypropylene film, available from Celgard Corporation as Celgard 2400, were provided, one for each of two layers.

The anode, cathode and separator were wound together from continuous webs into an electrode assembly (jellyroll) using an automatic winder. In the winding of each jellyroll, the cathode strip was introduced to the winding mandrel before the anode strip. The cathode and anode strips were aligned so that a small portion of the coated area of the cathode strip extended beyond the leading end and both sides of the anode. The electrode strips and separator were wound until the anode tab reached a predetermined location.

The cathode, anode and separator strips were cut to produce a jellyroll with the desired cathode and anode lengths, based on the spacing of the tabs on the anode strip. A strip of polypropylene film was fed into the trailing end jellyroll, wound around the jellyroll as an overwrap until a predetermined jellyroll diameter of 13.3 mm (0.525 inch) was reached. The overwrap film was cut and the end heat sealed to the jellyroll.

Jellyrolls were inserted into cans. As each jellyroll was formed, the anode tab, extending from one end of the jellyroll, was folded radially outward and then along the side of the jellyroll. The uncoated edge of the cathode strip, extending from the opposite end of the jellyroll from the tab, was crimped inward in the form of a star-shaped cone.

Plastic insulating discs were placed in the bottoms of 0.254 mm (0.010 inch) thick nickel plated steel cans with a can body outside diameter of 13.9 mm (0.548 inch). Each jellyroll was inserted into a can, with the anode tab at the bottom and along the side of the jellyroll.

The anode to cathode input ratio was determined as follows:

$$\text{Cathode capacity per linear inch} = (.0063 \text{ in. thick}) \times (1.535 \text{ in. wide}) \times (1.0 \text{ in.}) \times (16.387 \text{ cm}^3/\text{in}^3) \times (4.1555 \text{ gm/cm}^3 \text{ cathode density}) \times (0.64 \text{ solids packing}) \times (0.92 \text{ FeS}_2 \text{ in dry cathode}) \times (0.95 \text{ FeS}_2 \text{ purity}) \times (893.58 \text{ mAh/gm}) = 329 \text{ mAh/linear inch.}$$

$$\text{Anode capacity per linear inch} = (.006 \text{ in. thick}) \times (1.535 \text{ in. wide}) \times (1.0 \text{ in.}) \times (16.387 \text{ cm}^3/\text{in}^3) \times (0.534 \text{ gm/cm}^3 \text{ lithium density}) \times (3861.7 \text{ mAh/gm}) = 311 \text{ mAh/linear inch.}$$

$$\text{Anode to cathode input ratio} = 311/329 = 0.95.$$

1.6 grams of electrolyte were added to each cell. The electrolyte contained 63.05 weight percent 1,3-dioxolane, 27.63 weight percent 1,2-dimethoxyethane, 0.18 weight percent 3,5-dimethylisoxazole, and 9.14 weight percent lithium iodide. Conventional cell assembly and closing methods were utilized to complete the cell, followed by a predischarge regimen.

Features of the cells in Example 1 are summarized in Table 2 below.

EXAMPLE 2

Comparative R6 size Li/FeS$_2$ cells were made using the same manufacturing process as used in Example 1. Features of the comparative cells are summarized in Table 2 below. The cells in Example 1 differed from the comparative cells in a number a ways not directly related to the invention. The can diameter was 0.13 mm (0.005 in.) larger, the amount of capacity consumed during predischarge was smaller, and the electrode widths were 0.38 mm (0.015 in.) larger in Example 1.

EXAMPLE 3

Cells from Examples 1 and 2 were discharged continuously at 1000 milliamps to 1.0 volt. The results are summarized in Table 3.

Table 3 shows that cells made according to the invention gave about 35 percent more discharge capacity than the comparative cells. Separate testing showed that less than 11 percent of this increase was attributed to the reduction in capacity consumed during predischarge of the cells from Example 1 and possibly other small differences resulting from process variability. The greater electrode widths in the cells from Example 1 resulted in an increase of about 1 percent in input capacity. The larger can diameter in the cells from Example 1 accounted for an input capacity increase of about 2.4 percent. This leaves about a 20 percent increase in actual discharge capacity in cells from Example 1 compared to cells from Example 2 that was not attributed to these other differences.

Table 2

| Item | Parameter | Example 1 | Example 2 |
|---|---|---|---|
| Anode | Composition | Li-A1 alloy, 0.05 % A1 | Li-Al alloy, 0.05 % Al |
| | Thickness | 0.152 mm (0.0060 in.) | 0.152 mm (0.0060 in.) |
| | Width | 3.90 cm (1.535 in.) | 3.86 cm (1.520 in.) |
| | Initial length | 30.5 cm (12.00 in.) | 30.61 cm (12.05 in.) |
| | Final length | 30.61 cm (12.05 in.) | 30.73 cm (12.10 in.) |
| | Foil weight | 0.97 g | 0.95 g |

(continued)

|  |  | | |
|---|---|---|---|
|  | Tab material | Ni plated steel | Ni plated steel |
|  | Tab dimensions | 0.051 x 4.750 x 55.58 mm | 0.051 x 4.750 x 55.58 mm |
|  | Interfacial area | 222 cm$^2$ | 221 cm$^2$ |
|  | Interfacial input capacity | 3485 mAh | 3470 mAh |
|  | Total input capacity | 3725 mAh | 3664 mAh |
| Cathode | Collector material | A1 foil | A1 foil |
|  | Collector thickness | 0.254 mm (0.001 in.) | 0.254 mm (0.001 in.) |
|  | Collector width | 43.69 mm (1.720 in.) | 43.31 mm (1.705 in.) |
|  | Coating composition | $FeS_2$      92.00 % | $FeS_2$      92.75 % |
|  |  | Acet. Blk.      1.40 % | Acet. Blk.      2.50 % |
|  |  | MX-15 graphite      4.00 % | KS-6 graphite      2.25 % |
|  |  | Kraton G1651      2.00 % | PEPP binder      2.00 % |
|  |  | PTFE      0.30 % | PEO      0.50 % |
|  |  | Fumed silica      0.30 % | Silica |
|  | Coating total thickness | 0.1600 mm (0.0063 in.) | 0.1448 mm (0.0057 in.) |
|  | Coating width | 40.77 mm (1.605 in.) | 40.39 mm (1.590 in.) |
|  | Coating weight | 5.00 g | 3.97 g |
|  | Coating solids | 64 % | 57% |
|  | Cathode thickness | 0.1854 mm (0.0073 in.) | 0.1702 mm (0.0067 in.) |
|  | Cathode length | 28.83 mm (11.35 in.) | 28.96 mm (11.40 in.) |
|  | Interfacial area | 222 cm$^2$ | 221 cm$^2$ |
|  | Interfacial input capacity | 3690 mAh | 2949 mAh |
|  | Total input capacity | 3900 mAh | 3225 mAh |
| Separator | Thickness and type | 25 $\mu$m Celgard 2400 | 25 $\mu$m Celgard 2400 |
|  | Dimensions (each layer) | 0.44x78cm | 0.44 x 78 cm |
| Jellyroll | Outside diameter | 13.34 mm      (0.525 in.) | 13.21 mm (0.520 in.) |
| Can | Thickness | 0.254 mm      (0.010 in.) | 0.254 mm (0.010 in.) |
|  | Outside diameter | 13.92 mm (0.548 in.) | 13.79 mm (0.543 in.) |
| Electrolyte | Composition | DIOX      63.05 % | DIOX      63.05 % |
|  |  | DME      27.63 % | DME      27.63 % |
|  |  | DMI      0.18 % | DMI      0.18 % |
|  |  | LiI      9.14% | LiI      9.14% |
|  | Weight | 1.60 g | 1.60g |
| Cell | Internal void vol. | 10% | 12% |
|  | Anode:Cathode capacity | 0.95 (interfacial) | 1.18 (interfacial) |
|  | Predischarge | 185 mAh | 264 mAh |

Table 3

| Cell Type | Discharge Time (minutes) | Discharge Capacity (mAh) |
|---|---|---|
| Example 1 (invention) | 159 | 2650 |
| Example 2 (comparative) | 118 | 1959 |

Example 1 above is one embodiment of the present invention. Various modifications can be made, including but not limited to any of the following. The cell can have other shapes, such as prismatic. Electrode strips can be assembled together into alternate forms, with at least the cathode being bent. For example, at least the cathode can be wound, coiled, arced, folded, creased or hinged, or both the anode and cathode can be interwoven. Other cathode coating patterns may be used. For example, all of both major surfaces of the current collector substrate may be coated, or mass free (uncoated) zones can be located on one or both surfaces, one or both long edges or one or both ends of the cathode, depending on where and how electrical contact is made between the current collector and other cell components. Electrical contact between electrodes and other cell components can be made by means of pressure, with or without additional springs, or by fastening, such as by welding; conductive metal leads, such as strips or wires may or may not be used. Electrodes can have alternative sizes and shapes, depending on the cell size and design. Various types of current collectors (e.g., forms and materials) can be used. Alternative processes can be used for applying cathode material onto the current collector. For example, the material can be coated using a slotted die or another conventional coating process, or the cathode material can be combined with a screen, expanded metal or perforated current collector using an embedding or other conventional process for making electrode strips. Alternate materials can be used as rheological modifiers, slip agents and binders, and other materials can be added to the cathode slurry to improve manufacturing processes, discharge performance, shelf life or other cell characteristics. Embodiments of the cell of the present invention can incorporate these and other modifications.

1. An electrochemical cell comprising a cathode assembly, the cathode assembly comprising a metallic cathode current collector having two major surfaces and a cathode coating disposed on at least one of the two major surfaces, the coating comprising iron disulfide, and the cell further comprising a metallic lithium anode alloyed with aluminum, wherein the anode to cathode input ratio is less than or equal to 1.0.

2. A cell according to item 1, wherein the anode comprises less than 1.0 percent by weight of aluminum.

3. A cell according to item 2, wherein the anode comprises between 0.1 and 0.9 percent by weight of aluminum.

4. A cell according to item 3, wherein the anode comprises 0.5 percent by weight of aluminum.

5. A cell according to any preceding item, wherein the cathode coating further comprises a void volume of less than 43 percent.

6. A cell according to item 5, wherein the void volume is from 36 percent to 42 percent.

7. A cell according to any preceding item wherein the cathode coating further comprises synthetic graphite.

8. A cell according to item 7, wherein the synthetic graphite is highly crystalline synthetic graphite.

9. A cell according to item 8, wherein the highly crystalline synthetic graphite has a mean particle size of 3.0 to 11.0 $\mu$m, a BET surface area of 3.0 to 11.0 $m^2$/g. and a DBP of 160 to 200 percent.

10. A cell according to any preceding item wherein the cathode coating further comprises acetylene black.

11. A cell according to any preceding item, wherein the cathode coating further comprises a micronized polytetrafluoroethylene powder.

12. A cell according to any preceding item, wherein the cathode coating further comprises a styrene-ethylene-butylene-styrene block copolymer.

13. A cell according to any preceding item, wherein the cathode coating further comprises fumed silica.

14. A cell according to any preceding item, wherein the cathode coating further comprises a total of between 7.0 and 11.0 percent synthetic graphite and acetylene black, based on the total solids content of the cathode coating.

15. A cell according to any preceding item, wherein the synthetic graphite and the acetylene black together comprise between 10.0 and 10.5 volume percent of the total solids content of the cathode coating.

16. A cell according to item 14 or item 15, wherein the solids volume percent of the synthetic graphite is at least twice the solids volume percent of the acetylene black

17. A cell according to any preceding item wherein the cell further comprises an electrode assembly comprising the cathode assembly and the anode, and at least the cathode assembly is bent.

18. A cell according to item 17, wherein the anode is bent.

19. A cell according to item 18, wherein the cathode assembly and the anode are in a spirally wound configuration.

20. A cell according to any preceding wherein the cathode comprises the following components, in the corresponding amounts based on the total weight of all solids in the cathode coating: iron disulfide, 90.0 to 94.0 percent; acetylene black, 1.0 to 3.0 percent; synthetic graphite, 3.0 to 6.0 percent; polytetrafluoroethylene, 0.2 to 0.6 percent; silica, 0.2 to 0.6 percent; and SEBS block copolymer, 1.5 to 3.0 percent.

## Claims

1.  An electrochemical cell comprising:

    a non-aqueous electrolyte comprising an organic solvent,
    electrodes being wound together into a jellyroll electrode assembly, wherein the cathode assembly comprises a metallic cathode current collector having two major surfaces and a cathode coating comprising iron disulfide disposed on at least one of the two major surfaces and the anode comprising metallic lithium alloyed with less than 1.0 percent by weight of aluminum and electrical contact between the electrodes and other cell components is made by means of pressure or fastening,
    wherein the anode to cathode input ratio is less than or equal to 1.0, wherein the anode to cathode ratio is determined as follows:

    - anode to cathode input ratio = anode capacity per 2.54 cm [linear inch]/cathode capacity per 2.54 cm [linear inch]
    wherein
    - the anode capacity per 2.54 cm [linear inch] = (foil thickness) x (interfacial electrode width) x 2.54 cm [1 linear inch] x (density of lithium foil at 20 °C x (lithium energy density, 2861.7 mAh/g), and
    - the cathode capacity per 2.54 cm [linear inch] = (final cathode coating thickness) x (interfacial electrode width) x 2.54 cm [1 inch] x (cathode dry mix density) x (final cathode packing percentage) x (dry weight percent $FeS_2$) x (percent purity $FeS_2$) x ($FeS_2$ energy density, 893.58 mAh/g).

2.  The electrochemical cell of claim 1, wherein the electrical contact between the electrodes and other cell components is made by means of pressure with or without springs.

3.  The electrochemical cell of claim 1, wherein electrical contact between the electrodes and other cell components is made by means of welding.

4.  A method of making an electrochemical cell comprising:

    - applying a slurry containing iron disulfide and electrically conductive material in a solvent to a metallic cathode current collector to form a cathode,
    - winding the electrodes together into a jellyroll electrode assembly with an anode comprising metallic lithium

    wherein the cell has an anode to cathode input ratio that is less than or equal to 1.0, wherein the anode to cathode ratio is determined as follows:

- anode to cathode input ratio = anode capacity per 2.54 cm [linear inch]/cathode capacity per 2.54 cm [linear inch] wherein
- the anode capacity per 2.54 cm [linear inch] = (foil thickness) x (interfacial electrode width) x 2.54 cm [1 linear inch] x (density of lithium foil at 20 °C x (lithium energy density, 2861.7 mAh/g), and
- the cathode capacity per 2.54 cm [linear inch] = (final cathode coating thickness) x (interfacial electrode width) x 2.54 cm [1 inch] x (cathode dry mix density) x (final cathode packing percentage) x (dry weight percent $FeS_2$) x (percent purity $FeS_2$) x ($FeS_2$ energy density, 893.58 mAh/g).

5. The method of claim 4, wherein the slurry further contains other additives.

6. The method according to claim 4, wherein the solvent is aqueous.

7. The method according to claim 4, wherein the metallic lithium is alloyed with less than 1.0 percent by weight.

8. The method according to claim 4 further comprising calendaring the cathode to achieve a cathode porosity of less than 43 percent void volume.

FIG. 1